# EUROPEAN PATENT APPLICATION

(11) **EP 4 206 749 A1**
(43) Date of publication of application: **05.07.2023**
(21) Application number: 22216819.7
(22) Date of filing: 27.12.2022
(51) Int. Cl.: G01V 5/00, G01N 23/046

(54) **RADIATION INSPECTION SYSTEM**

(30) Priority: 30.12.2021 CN 202111668939
(71) Applicant: Nuctech (Beijing) Company Limited, Beijing 101500 (CN); Nuctech Company Limited, TongFang Building Shuangqinglu Road Haidian District Beijing 100084 (CN)
(72) Inventor: FAN, Xuping, BEIJING, 100084 (CN); SONG, Quanwei, Beijing, 100084 (CN); SHI, Junping, BEIJING, 100084 (CN); HE, Yuan, BEIJING, 100084 (CN); MENG, Hui, BEIJING, 100084 (CN)
(74) Representative: Gunzelmann, Rainer

(57) **Abstract**

The present disclosure relates to a radiation inspection system, including: a radiation source (10), having an accelerator target point (11); and a detector arm, comprising an arm body (20) and a plurality of detecting modules (30), wherein the plurality of detecting modules (30) are arranged on the arm body (20) along a length direction of the arm body (20), each detecting module (30) comprises a circuit board (31) and a plurality of detector crystals (32) mounted on the circuit board (31), mounting directions of the plurality of detector crystals (32) in each detecting module (30) are parallel to each other, are arranged along a reference straight line (R) in the circuit board (31) and have a preset included angle relative to the reference straight line (R), and the plurality of detecting modules (30) correspond to at least two different preset included angles.

## Description

### TECHNICAL FIELD

The present disclosure relates to the field of radiation inspection, in particular to a radiation inspection system.

### BACKGROUND

In a process of radiation inspection, a radiation source emits X-rays or γ-rays to an object, a detector assembly located on the other side of the inspected object can receive a ray signal weakened by the object, and image information representing an information inside the object is converted and generated through a data processing module.

By taking a container/vehicle inspection system as an example, the system includes a detector arm for forming an inspection channel. A plurality of detecting modules with the same specification may be disposed on the detector arm, and each detecting module includes a plurality of detector crystals disposed side by side. In order to enable the detecting modules to directly face a beam direction of the radiation source, the plurality of detecting modules on the detector arm are respectively disposed at different mounting angles.

### SUMMARY

According to the research of inventors, in the plurality of detecting modules mounted on the detector arm, the distances between marginal detector crystals of adjacent detecting modules and a target point of the radiation source have an abrupt change, which affects the quality of inspection images generated by the system.

In view of this, embodiments of the present disclosure provide a radiation inspection system which can improve the quality of the generated inspection images.

In one aspect of the present disclosure, a radiation inspection system is provided. The radiation inspection system includes: a radiation source, having an accelerator target point; and a detector arm, comprising an arm body and a plurality of detecting modules, wherein the plurality of detecting modules are arranged on the arm body along a length direction of the arm body, each detecting module comprises a circuit board and a plurality of detector crystals mounted on the circuit board, mounting directions of the plurality of detector crystals in each detecting module are parallel to each other, are arranged along a reference straight line in the circuit board and have a preset included angle relative to the reference straight line, and the plurality of detecting modules correspond to at least two different preset included angles.

In some embodiments, the plurality of detecting modules comprise a plurality of detecting module groups, at least one of the plurality of detecting module groups comprises a plurality of identical detecting modules disposed adjacently, and the preset included angle corresponding to each detecting module in the plurality of identical detecting modules is different from the preset included angle corresponding to at least one other detecting module group.

In some embodiments, the plurality of identical detecting modules have different mounting angles relative to the arm body, so that in the plurality of identical detecting modules, extension lines of at least part of the detector crystals of each detecting module along the mounting directions pass through the accelerator target point.

In some embodiments, the circuit board of each detecting module is in shape of a parallelogram, and a first side of the parallelogram, as the reference straight line in the circuit board, forms a preset included angle with the mounting directions of the plurality of detector crystals.

In some embodiments, in the parallelogram, a second side and a third side which are opposite to each other and adjacent to the first side are both parallel to the mounting directions of the plurality of detector crystals.

In some embodiments, the plurality of detecting modules in each detecting module group are disposed sequentially and adjacently along the length direction of the arm body.

In some embodiments, the arm body comprises: a vertical arm body configured to be vertically disposed in case that the radiation inspection system is in an inspection state, wherein the preset included angles respectively corresponding to respective detecting module groups arranged on the vertical arm body and located above a horizontal plane of the accelerator target point gradually decrease upward along a vertical direction.

In some embodiments, the arm body further comprises: a horizontal arm body configured to be horizontally disposed in case that the radiation inspection system is in the inspection state, wherein the preset included angles respectively corresponding to respective detecting module groups arranged on the horizontal arm body gradually decrease along a horizontal direction away from the accelerator target point.

In some embodiments, the arm body comprises a first arm body section and a second arm body section, the plurality of detecting module groups comprise at least two detecting module groups located on the first arm body section and at least two detecting module groups located on the second arm body section, and an inter-group distance between the at least two detecting module groups located on the first arm body section is less than an inter-group distance between the at least two detecting module groups located on the second arm body section.

In some embodiments, a length direction of the first arm body section is parallel to a length direction of the second arm body section, and a distance between the first arm body section and the accelerator target point in the length direction of the first arm body section is less than a distance between the second arm body section and the accelerator target point in the length direction of the second arm body section.

In some embodiments, the arm body comprises: a vertical arm body having a first arm body section and configured to be vertically disposed in case that the radiation inspection system is in an inspection state; and a horizontal arm body having a second arm body section and configured to be horizontally disposed in case that the radiation inspection system is in the inspection state.

Therefore, according to the embodiments of the present disclosure, the plurality of detecting module groups are disposed on the arm body of the detector arm, so that the preset included angle of the plurality of detector crystals in the detecting module relative to the reference straight line in the circuit board is different from the preset included angles of the plurality of detector crystals in other detecting modules relative to the reference straight line in the circuit board. When the detecting modules are mounted, the detecting modules corresponding to different preset included angles can be adopted according to different mounting positions of the arm body, and there is no need to set respective detecting modules to larger mounting angles according to the beam direction of the radiation source. In this way, the abrupt change of the distances between the marginal detector crystals of adjacent detecting modules and the target point of the radiation source can be effectively reduced or eliminated, so that the imaging is clearer, and an imaging index is improved.

### BRIEF DESCRIPTION OF THE DRAWINGS

The accompanying drawings, which form a part of the description, describe the embodiments of the present disclosure, and together with the description, serve to explain principles of the present disclosure.

The present disclosure can be more clearly understood from the following detailed descriptions with reference to the accompanying drawings, in which:
Fig. 1 is a schematic structural diagram of some embodiments of a radiation inspection system according to the present disclosure;
Figs. 2-4 are schematic structural diagrams of a detecting module with different preset included angles between detector crystals and a reference straight line in a circuit board in some embodiments of the radiation inspection system according to the present disclosure;
Fig. 5 is a schematic structural diagram of a detecting module in some embodiments of the radiation inspection system according to the present disclosure;
Fig. 6 is a change schematic diagram of the distance from an accelerator target point to adjacent detector crystals of adjacent detecting modules on a detector arm in related art; and
Fig. 7 is a change schematic diagram of the distance from an accelerator target point to adjacent detector crystals of adjacent detecting modules on a detector arm in some embodiments of the radiation inspection system according to the present disclosure.

It should be understood that sizes of various parts shown in the drawings are not drawn according to an actual proportional relationship. In addition, the same or similar reference signs denote the same or similar components.

### DETAILED DESCRIPTION

Various exemplary embodiments of the present disclosure will now be described in detail with reference to the accompanying drawings. The descriptions of the exemplary embodiments are merely illustrative and are in no way intended as a limitation to the present disclosure and its application or use. The present disclosure may be implemented in many different forms and is not limited to the embodiments described here. These embodiments are provided to make the present disclosure thorough and complete, and fully express the scope of the present disclosure to those skilled in the art. It should be noted: the relative arrangement, material components, numerical expressions and numerical values of the components and steps set forth in these embodiments should be construed as merely illustrative without limitations unless otherwise specified.

"First", "second", and similar words used in the present disclosure do not denote any order, quantity, or importance, but are merely used to distinguish different parts. "include" or "contain" and similar words are intended to mean that the elements before said word cover the elements listed after said word, without excluding the possibility of covering other elements. "Upper", "lower", "left", "right" and the like are only used to indicate a relative positional relationship, and when the absolute position of a described object changes, the relative positional relationship may also change accordingly.

In the present disclosure, when it is described that a specific device is located between a first device and a second device, there may or may not be an intermediate device between the specific device and the first device or the second device. When it is described that the specific device is connected to other devices, the specific device may be directly connected to the other devices without the intermediate device, or may not be directly connected to the other devices with the intermediate device.

Unless otherwise particularly defined, all terms (including technical terms or scientific terms) used in the present disclosure have the same meaning as commonly understood by those ordinary skilled in the art to which the present disclosure belongs. It will be further understood that the terms, such as those defined in commonly used dictionaries, should be interpreted as having a meaning that is consistent with their meaning in the context of the related art and will not be interpreted in an idealized or overly formal sense unless expressly so defined herein.

Techniques, methods, and devices known to those ordinary skilled in the related art may not be discussed in detail but where appropriate, the techniques, methods, and devices should be considered as part of the description.

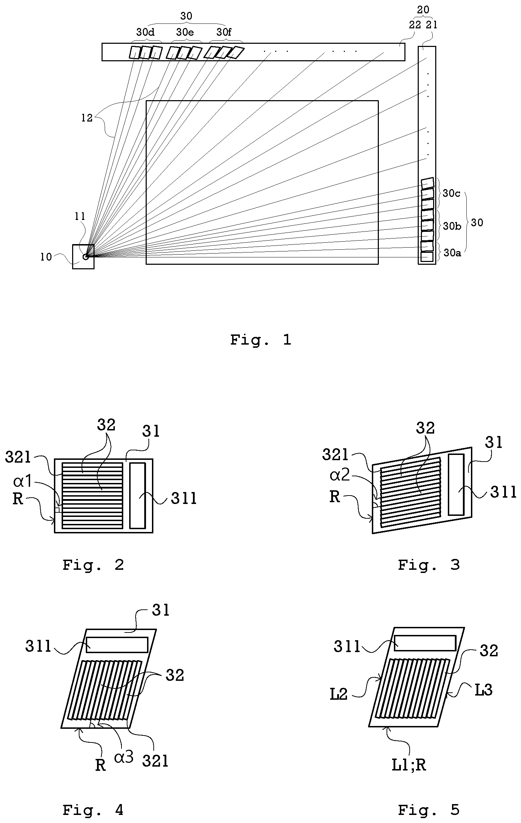

Fig. 1 is a schematic structural diagram of some embodiments of a radiation inspection system according to the present disclosure. Figs. 2-4 are schematic structural diagrams of a detecting module with different preset included angles between detector crystals and the reference straight line in a circuit board in some embodiments of the radiation inspection system according to the present disclosure. Referring to Figs. 1-4, in some embodiments, the radiation inspection system includes a radiation source 10 and a detector arm. The radiation source 10 has an accelerator target point 11, and high-speed particles generated by the radiation source 10 can bombard the accelerator target point 11, so as to emit a radiation beam from the accelerator target point 11 to an inspected object. In some embodiments, the radiation source 10 may be an X-ray source or a γ-ray source.

In Fig. 1, the detector arm includes an arm body 20 and a plurality of detecting modules 30. The plurality of detecting modules 30 are arranged on the arm body 20 along a length direction of the arm body 20.

Fig. 5 is a schematic structural diagram of a detecting module in some embodiments of the radiation inspection system according to the present disclosure. Referring to Figs. 2-5, each detecting module 30 includes a circuit board 31 and a plurality of detector crystals 32 mounted on the circuit board 31. Mounting directions of the plurality of detector crystals 32 in each detecting module 30 are parallel to each other, are arranged along a reference straight line R in the circuit board 31 and have a preset included angle relative to the reference straight line R. The plurality of detecting modules 30 correspond to at least two different preset included angles.

In the present embodiment, the plurality of detecting modules are disposed on the arm body of the detector arm, and the preset included angle of the plurality of detector crystals in each detecting module relative to the reference straight line in the circuit board is different from the preset included angles of the plurality of detector crystals in other detecting modules relative to the reference straight line in the circuit board. When the detecting modules are mounted, the detecting modules corresponding to different preset included angles can be adopted according to different mounting positions of the arm body, and there is no need to set respective detecting modules to larger mounting angles according to the beam direction of the radiation source. In this way, the abrupt change of the distances between the marginal detector crystals of adjacent detecting modules and the target point of the radiation source can be effectively reduced or eliminated, so that the imaging is clearer, and an imaging index is improved.

Referring to Figs. 2-5, in some embodiments, the detector crystal 32 is a elongate rectangular parallelepiped, and the mounting direction thereof is a length direction of the detector crystal 32. The circuit board 31 may include a control circuit 311 electrically connected to the detector crystal 32, and the control circuit 311 may be located on one side of the detector crystal 32 away from the accelerator target point 11.

The plurality of detecting modules 30 include a plurality of detecting module groups, such as a plurality of detecting module groups 30a, 30b, 30c, 30d, 30e and 30f in Fig. 1, wherein at least one of the plurality of detecting module groups includes a plurality of identical detecting modules 30 disposed adjacently. The preset included angle corresponding to each detecting module 30 in the plurality of identical detecting modules 30 is different from the preset included angle corresponding to at least one other detecting module group.

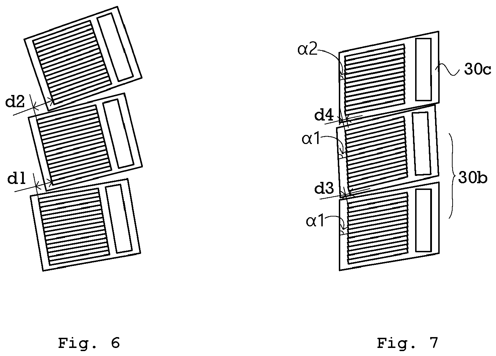

Fig. 6 is a change schematic diagram of the distance from the accelerator target point to adjacent detector crystals of adjacent detecting modules on the detector arm in the related art. Fig. 7 is a change schematic diagram of the distance from the accelerator target point to adjacent detector crystals of adjacent detecting modules on the detector arm in some embodiments of the radiation inspection system according to the present disclosure. Referring to Fig. 6, in some related arts, when mounting the detecting modules, installers adopt the detecting modules with the same specification at different mounting positions of the arm body. In order to make respective detecting modules directly face the beam direction of the radiation source, respective detecting modules are disposed at different mounting angles, and the difference between the mounting angles of adjacent detecting modules is larger, which results in a larger abrupt change of the distances from the accelerator target point to the marginal detector crystals of adjacent detecting modules, such as d1 and d2 in Fig. 6.

Referring to Fig. 7, in the present embodiment, when mounting the detecting modules, the installers may adopt the detecting modules corresponding to different preset included angles according to different mounting positions of the arm body. For example, in Fig. 7, the lower two detecting modules have the same specification and form a detecting module group 30b, and the detector crystals thereof both form a preset included angle α1 with the reference straight line in the circuit board, while the upper detecting module group 30c has a different specification from the detecting module group 30b, and the detector crystals of the upper detecting module group 30c form a preset included angle α2 with the reference straight line in the circuit board. After the mounting in this way, the difference between the mounting angles of adjacent detecting modules is smaller, so that the abrupt change of the distances from the accelerator target point to the marginal detector crystals of adjacent detecting modules is smaller, such as d3 and d4 in Fig. 7. Therefore, the present embodiment can effectively reduce or eliminate the abrupt change of the distances between the marginal detector crystals of adjacent detecting modules and the target point of the radiation source, so that the imaging is clearer and the imaging index is improved.

In some other related arts, the detecting modules with different specifications are respectively mounted at different mounting positions of the arm body. Compared with the related arts, in the present embodiment, the plurality of identical detecting modules are disposed in groups (such as the grouped detecting module 30b in Fig 7), so that the types of the detecting modules with different shapes and specifications used in the radiation inspection system are effectively reduced, the production cost and after-sales maintenance cost are reduced, and practicability is improved.

Referring to Fig. 1, in some embodiments, the plurality of identical detecting modules 30 are mounted at different angles relative to the arm body 20, so that extension lines 12 of at least part of the detector crystals 32 of each of the plurality of identical detecting modules 30 along the mounting directions pass through the accelerator target point 11, thereby ensuring that the detecting modules directly face the beam direction of the radiation source and improving the imaging quality. In Fig. 1, each of the plurality of detecting module groups 30a, 30b, 30c, 30d, 30e and 30f includes at least two identical detecting modules 30 in the group. The plurality of detecting modules 30 of each detecting module group are disposed sequentially and adjacently along the length direction of the arm body 20. In order that the extension lines 12 of at least part of the detector crystals 32 of each detecting module 30 along the mounting directions pass through the accelerator target point 11, respective detecting modules only need to be slightly adjusted.

Referring to Fig. 5, in some embodiments, the circuit board 31 of each detecting module 30 is in shape of a parallelogram, and a first side L1 of the parallelogram, as the reference straight line R in the circuit board 31, forms a preset includes angle with the mounting directions of the plurality of detector crystals 32. The first side L1 may be located on a signal receiving side 321 of the detector crystal 32. Referring to Fig. 2, the circuit board 31 may also be rectangular, that is, in shape of a parallelogram with an internal angle of 90°. Accordingly, the preset included angle α1 between the mounting directions of the detector crystals 32 on the rectangular circuit board 31 and the reference straight line R is 90°. The preset included angles α2 and α3 between the mounting directions of the detector crystals 32 of other detecting module groups shown in Figs. 3 and 4 and the reference straight line R are both less than 90°.

In Fig. 5, a second side L2 and a third side L3 which are opposite to each other and adjacent to the first side L1 in the parallelogram are parallel to the mounting directions of the plurality of detector crystals 32. In this way, the difference between the mounting angles of the circuit boards 32 of adjacent detecting modules is smaller, thereby further reducing the abrupt change of the distances between the marginal detector crystals of adjacent detecting modules and the target point of the radiation source.

Referring to Fig. 1, in some embodiments, the arm body 20 includes a vertical arm body 21 configured to be vertically disposed when the radiation inspection system is in an inspection state. The preset included angles respectively corresponding to respective detecting module groups (such as the detecting module groups 30a, 30b, 30c) arranged on the vertical arm body 21 and located above a horizontal plane of the accelerator target point 11 gradually decrease upward in a vertical direction. In this way, the preset included angles of the detecting modules can be matched with the mounting positions of the detecting modules relative to the accelerator target point.

For a certain detecting module group farther away from the accelerator target point in the vertical direction, if the detecting modules with the same specification and the preset included angle of 90° in the related art are adopted, it is necessary to set the mounting angles of the detecting modules on the vertical arm body 21 to be larger, and by reducing the preset included angle of the detecting module group, the larger mounting angles are shared by the mounting angles of the detecting modules and the preset included angle of the detecting modules. Therefore, the mounting angles of the detecting modules on the vertical arm body 21 are set to be smaller, further the difference between the mounting angles of adjacent detecting modules is reduced, and the abrupt change of the distances between the marginal detector crystals of adjacent detecting modules and the target point of the radiation source is reduced.

The farther the detecting module is away from the accelerator target point in the vertical direction, the larger the required mounting angle is usually. In this way, by allowing the preset included angles corresponding to respective detecting module groups closer to the accelerator target point in the vertical direction larger, and allowing the preset included angles corresponding to respective detecting module groups farther away from the accelerator target point in the vertical direction smaller, the differences between the mounting angles of the detecting modules at respective mounting positions on the vertical arm body 21 are effectively reduced and the abrupt change of the distances between the marginal detector crystals within and between respective detecting module groups and the target point of the radiation source is reduced.

In order to reduce a length of the vertical arm body and meet scanning requirements of a larger-sized inspected object, referring to Fig. 1, in some embodiments, the arm body 20 further includes a horizontal arm body 22 configured to be horizontally disposed when the radiation inspection system is in the inspection state, wherein the preset included angles respectively corresponding to respective detecting module groups (such as the detecting module groups 30d, 30e, 30f) arranged on the horizontal arm body 22 gradually decrease along a horizontal direction away from the accelerator target point 11.

The preset included angles corresponding to respective detecting module groups disposed on the horizontal arm body 22 are different. Referring to Fig. 4, the preset included angle α3 may be formed between the mounting direction of the detector crystal 32 and the reference straight line R. The way and reason of disposing the detecting modules on the horizontal arm body 22 are the same as or similar to the above way and reason of disposing the detecting modules on the vertical arm body, and thus will not be described here.

Inter-group distances of respective detecting module groups may be the same or different. In some embodiments, the arm body 20 includes a first arm body section and a second arm body section. The plurality of detecting module groups include at least two detecting module groups located on the first arm body section and at least two detecting module groups located on the second arm body section, and the inter-group distance between the at least two detecting module groups located on the first arm body section is less than the inter-group distance between the at least two detecting module groups located on the second arm body section.

The smaller inter-group distance can realize denser arrangement of the detecting modules and improve the detection accuracy of a scanning range corresponding to the first arm body section. On the other hand, the larger inter-group distance can realize sparser arrangement of the detecting modules, save the usage amount of the detecting modules, and reduce the production cost and after-sales maintenance cost.

In some embodiments, a length direction of the first arm body section is parallel to a length direction of the second arm body section, and the distance between the first arm body section and the accelerator target point 11 in the length direction of the first arm body section is less than the distance between the second arm body section and the accelerator target point 11 in the length direction of the second arm body section. In other words, the first arm body section and the second arm body section may be different parts of the straight arm body along the length direction. The inter-group distance between at least two detecting module groups disposed on the arm body section farther away from the accelerator target point 11 along the length direction is wider, and the inter-group distance between at least two detecting module groups disposed on the arm body section closer to the accelerator target point 11 along the length direction is narrower.

In some embodiments, the arm body 20 includes the vertical arm body 21 and the horizontal arm body 22. The vertical arm body 21 has the first arm body section, and is configured to be vertically disposed when the radiation inspection system is in the inspection state. The horizontal arm body 22 has the second arm body section, and is configured to be horizontally disposed when the radiation inspection system is in the inspection state. In other words, when the radiation inspection system is in the inspection state, the first arm body section and the second arm body section are in a vertical state and a horizontal state respectively. The inter-group distance between at least two detecting module groups disposed on the vertically disposed first arm body section is narrower, and the inter-group distance between at least two detecting module groups disposed on the horizontally disposed second arm body section is wider.

The inter-group distances of at least two detecting module groups on different arm body sections may be determined according to an interested area of the inspected object. For example, for the inspected object (such as a container or vehicle) in Fig. 1, internal materials thereof are usually piled up at the lower position, while the higher position may be empty or have only a small amount of materials, which may distinguish the interested area and the uninterested area of the inspected object to some extent. Accordingly, the interested area corresponds to the lower plurality of detecting module groups on the vertical arm body, while the uninterested area corresponds to the upper plurality of detecting module groups on the vertical arm body or the plurality of detecting module groups on the horizontal arm body. In some other embodiments, other layouts may be adopted between the radiation source and the detector arm, and accordingly, the arrangement of the detecting modules corresponding to the interested area and the uninterested area may be different, and is not limited to the situation shown in Fig. 1.

So far, the embodiments of the present disclosure have been described in detail. In order to avoid obscuring concepts of the present disclosure, some details commonly known in the art are not described. Those skilled in the art can fully understand how to implement the technical solutions disclosed here according to the above descriptions.

Although some specific embodiments of the present disclosure have been described in detail by examples, it should be understood by those skilled in the art that the above examples are only for illustration, not for limiting the scope of the present disclosure. Those skilled in the art should understand that the above embodiments can be modified or some technical features can be equivalently replaced without departing from the scope and spirits of the present disclosure. The scope of the present disclosure is defined by the appended claims.

## Claims

1. A radiation inspection system, comprising:
a radiation source (10), having an accelerator target point (11); and
a detector arm, comprising an arm body (20) and a plurality of detecting modules (30), wherein the plurality of detecting modules (30) are arranged on the arm body (20) along a length direction of the arm body (20), each detecting module (30) comprises a circuit board (31) and a plurality of detector crystals (32) mounted on the circuit board (31), mounting directions of the plurality of detector crystals (32) in each detecting module (30) are parallel to each other, are arranged along a reference straight line (R) in the circuit board (31) and have a preset included angle relative to the reference straight line (R), and the plurality of detecting modules (30) correspond to at least two different preset included angles.

2. The radiation inspection system according to claim 1, wherein the plurality of detecting modules (30) comprise a plurality of detecting module groups (30a; 30b; 30c; 30d; 30e; 30f), at least one of the plurality of detecting module groups (30a; 30b; 30c; 30d; 30e; 30f) comprises a plurality of identical detecting modules (30) disposed adjacently, and the preset included angle corresponding to each detecting module (30) in the plurality of identical detecting modules (30) is different from the preset included angle corresponding to at least one other detecting module group (30a; 30b; 30c; 30d; 30e; 30f) .

3. The radiation inspection system according to claim 2, wherein the plurality of identical detecting modules (30) have different mounting angles relative to the arm body (20), so that in the plurality of identical detecting modules (30), extension lines (12) of at least part of the detector crystals (32) of each detecting module (30) along the mounting directions pass through the accelerator target point (11).

4. The radiation inspection system according to claim 2 or 3, wherein the circuit board (31) of each detecting module (30) is in shape of a parallelogram, and a first side (L1) of the parallelogram, as the reference straight line (R) in the circuit board (31), forms a preset included angle with the mounting directions of the plurality of detector crystals (32).

5. The radiation inspection system according to claim 4, wherein in the parallelogram, a second side (L2) and a third side (L3) which are opposite to each other and adjacent to the first side (L1) are both parallel to the mounting directions of the plurality of detector crystals (32).

6. The radiation inspection system according to any one of claims 2 to 5, wherein the plurality of detecting modules (30) in each detecting module group (30a; 30b; 30c; 30d; 30e; 30f) are disposed sequentially and adjacently along the length direction of the arm body (20).

7. The radiation inspection system according to claim 6, wherein the arm body (20) comprises:
a vertical arm body (21) configured to be vertically disposed in case that the radiation inspection system is in an inspection state,
wherein the preset included angles respectively corresponding to respective detecting module groups arranged on the vertical arm body (21) and located above a horizontal plane of the accelerator target point (11) gradually decrease upward along a vertical direction.

8. The radiation inspection system according to claim 7, wherein the arm body (20) further comprises:
a horizontal arm body (22) configured to be horizontally disposed in case that the radiation inspection system is in the inspection state,
wherein the preset included angles respectively corresponding to respective detecting module groups arranged on the horizontal arm body (22) gradually decrease along a horizontal direction away from the accelerator target point (11).

9. The radiation inspection system according to any one of claims 2 to 8, wherein the arm body (20) comprises a first arm body section and a second arm body section, the plurality of detecting module groups (30a; 30b; 30c; 30d; 30e; 30f) comprise at least two detecting module groups located on the first arm body section and at least two detecting module groups located on the second arm body section, and an inter-group distance between the at least two detecting module groups located on the first arm body section is less than an inter-group distance between the at least two detecting module groups located on the second arm body section.

10. The radiation inspection system according to claim 9, wherein a length direction of the first arm body section is parallel to a length direction of the second arm body section, and a distance between the first arm body section and the accelerator target point (11) in the length direction of the first arm body section is less than a distance between the second arm body section and the accelerator target point (11) in the length direction of the second arm body section.

11. The radiation inspection system according to claim 9 or 10, wherein the arm body (20) comprises:
a vertical arm body (21) having a first arm body section and configured to be vertically disposed in case that the radiation inspection system is in an inspection state; and
a horizontal arm body (22) having a second arm body section and configured to be horizontally disposed in case that the radiation inspection system is in the inspection state.
